# EUROPEAN PATENT SPECIFICATION

(11) **EP 4 521 272 B1**
(45) Date of publication and mention of the grant of the patent: **08.04.2026**
(21) Application number: 24192812.6
(22) Date of filing: 05.08.2024
(51) Int. Cl.: G06Q 20/38, G06F 21/31, H04L 9/40, G06F 21/42, G06Q 20/40, H04W 64/00

(54) **RESOURCE SERVER AND SERVICE PROVIDING SYSTEM**
RESSOURCENSERVER UND DIENSTBEREITSTELLUNGSSYSTEM
SERVEUR DE RESSOURCES ET SYSTÈME DE FOURNITURE DE SERVICE

(30) Priority: 07.09.2023 JP 2023144962
(43) Date of publication of application: 12.03.2025
(73) Proprietor: FUJITSU LIMITED, Kawasaki-shi, Kanagawa 211-8588 (JP)
(72) Inventor: Noda, Bintatsu, Kawasaki-shi, Kanagawa, 211-8588 (JP); Kashima, Hiroaki, Kawasaki-shi, Kanagawa, 211-8588 (JP)
(74) Representative: Hoffmann Eitle

(56) References cited:
- US-A1- 2006 246 920
- US-A1- 2021 224 781
- US-A1- 2022 353 253

## Description

### FIELD

The embodiments discussed herein are related to a resource server, a service providing system including the resource server.

### BACKGROUND

A business model in which a service provider utilizes user resources held or managed by a resource server to provide a service to a user has become widespread. For example, the resource server manages location information indicating the location of a user terminal as the user resource. The service provider operates as a client, and acquires the location information of the user terminal from the resource server. Then, the service provider provides a corresponding service to the user terminal based on the acquired location information. Alternatively, the service provider provides the user terminal with the user resource acquired from the resource server. Note that related techniques are described, for example, in Japanese National Publication of International Patent Application No. 2022-512352, Japanese National Publication of International Patent Application No. 2022-518638, US Patent Publication No. 2019/0386981, and US Patent Publication No. 2015/0095989.

When a client acquires resources of the user from the resource server, authorization of the user is required in many cases. However, in the conventional art, a procedure for obtaining authorization of a user for a client to acquire user resources from a resource server incurs a large cost. For example, credential information of each client needs to be registered with the resource server in advance. At this time, labor for registering the credential information is large on the client side. In addition, on the resource server side, the labor of work of confirming the reliability of the credential information of the client is large. Further, on the resource server side, the cost for securely managing the credential information that is secret information is high.

It is an object in one aspect of the present invention to reduce the cost of at least one of a resource server or a client device in a service providing system in which the resource server and the client device cooperate to provide a service to a user.

US 2022/353253 A1 describes a method and system for provisioning credentials. The method includes receiving an encrypted data packet including a first passcode and credentials in encrypted form, and a second passcode. The second passcode is compared to a first passcode. If the passcodes match, then a server computer can transmit a token associated with the credentials to a service provider computer.

### SUMMARY

There is provided a server program as set out in Claim 1. There is also provided a resource server as set out in Claim 7. There is also provided a service providing system as set out in Claim 8.

### BRIEF DESCRIPTION OF DRAWINGS

FIG. 1 illustrates an example of a service providing system according to an embodiment of the present disclosure;
FIG. 2 illustrates an example of a procedure of providing a user resource to a client based on authorization of a user;
FIG. 3 illustrates an example of a procedure in which a service providing system according to an embodiment of the present disclosure provides a service to a user;
FIGS. 4A and 4B illustrate examples of a passcode notification screen and a passcode input screen;
FIG. 5 illustrates an example of a passcode management table;
FIG. 6 illustrates an example of a functional configuration of a client device;
FIG. 7 illustrates an example of a functional configuration of a resource server;
FIG. 8 is a flowchart illustrating an example of a process of the client device;
FIG. 9 is a flowchart illustrating an example of a process of the resource server;
FIG. 10 illustrates a variation of a procedure for providing a service to a user; and
FIG. 11 illustrates an example of a hardware configuration of the resource server.

### DESCRIPTION OF EMBODIMENTS

There is disclosed a resource server which manages a resource relating to a user terminal. The resource server includes: a communication unit; and a passcode processor that processes a passcode received by the communication unit. The communication unit receives, from a client via the user terminal, a first passcode that is given from the client to the user terminal in response to an access from the user terminal to the client that provides a service to the user terminal. The, passcode processor requests the user terminal to input a passcode. The communication unit receives a second passcode input at the user terminal. The passcode processor determines whether to provide the resource relating to the user terminal to the client based on a result of a comparison between the first passcode and the second passcode.

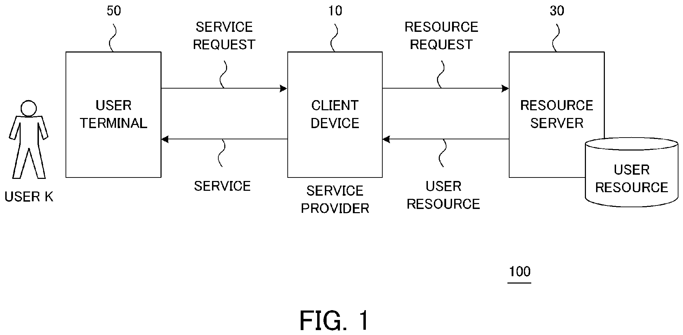

FIG. 1 illustrates an example of a service providing system according to an embodiment of the present disclosure. In this example, a service providing system 100 includes a client device 10 and a resource server 30. Note that the service providing system 100 may include other devices not illustrated in FIG. 1.

Upon receiving a service request from a user terminal 50, the client device 10 provides a service designated by the service request to the user terminal 50. At this time, the client device 10 can acquire the user resource held or managed by the resource server 30 as necessary, and provide a service to the user terminal 50 based on the user resource. Note that the client device 10 is achieved by a computer used by a service provider. In addition, the client device 10 is an example of a service providing device that provides a service to the user terminal 50.

The resource server 30 holds or manages a resource relating to the user terminal 50. The resource relating to the user terminal 50 includes the resource of the user of the user terminal 50. Note that, in the following description, the user of the user terminal 50 may be referred to as "user K". Then, the resource server 30 provides a resource relating to the user terminal 50 to the client device 10 in response to a request from the client device 10. At this time, the resource server 30 confirms to the user K whether or not the client device 10 may acquire the resource relating to the user terminal 50. When the authorization of the user K is obtained, the resource server 30 provides a resource relating to the user terminal 50 to the client device 10.

The user terminal 50 is, for example, a smartphone or a personal computer, and operates according to an instruction of the user K. In addition, the user terminal 50 has a communication function, and can communicate with the client device 10 and the resource server 30.

In the service providing system 100 having the above configuration, the client device 10 provides a service to the user K based on, for example, the location information indicating the location of the user terminal 50. The resource server 30 acquires and manages the location information of the user terminal 50 as a resource of the user terminal 50. In this case, when receiving the service request from the user terminal 50, the client device 10 requests the resource server 30 for the location information of the user terminal 50. The resource server 30 acquires the location information of the user terminal 50 and provides the location information to the client device 10. Then, in a case where the location information of the user terminal 50 satisfies a specified condition, the client device 10 provides a service to the user K. For example, when the user terminal 50 is located in a designated area, the client device 10 transmits designated video contents to the user terminal 50.

As described above, when the client device 10 provides a service to the user, the client device 10 may acquire the user resource. However, some users consider that it is undesirable that their own resources (in this example, the location information) are acquired by the client device 10. Therefore, the service providing system 100 is preferably configured to obtain authorization of the user for the client device 10 to acquire the user resource.

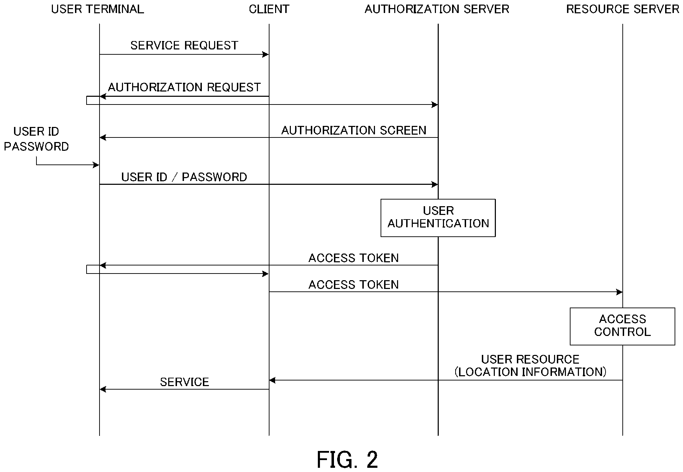

FIG. 2 illustrates an example of a procedure of providing a user resource to a client based on authorization of a user. In this example, the service providing system includes an authorization server in addition to the client device and the resource server. However, the resource server and the authorization server may configure a web application programming interface (WebAPI). Then, a service request is transmitted from the user terminal to the client device.

When providing a service to the user in response to the service request, the client device acquires a resource of the user. In this example, it is assumed that the client device acquires the location information of the user terminal as the user resource.

In this case, the client device transmits an authorization request to the authorization server. The authorization request includes a message requesting the location information of a target user. Then, the authorization request is forwarded to the authorization server via the user terminal by using HTTP redirect.

The authorization server transmits an authorization screen to the user terminal. The authorization screen includes information relating to a service provider that requests the location information of the user terminal. Then, the authorization screen is displayed on the user terminal.

The user of the user terminal determines whether to provide user's own resource (that is, the location information) to the service provider presented on the authorization screen. Then, in a case where the user's own resource may be provided to the service provider, the user inputs the user's own user ID and password by using the authorization screen. Then, the input user ID and password are transmitted from the user terminal to the authorization server.

The authorization server executes user authentication. That is, the authorization server authenticates the user based on the received user ID and password. When the user authentication succeeds, the authorization server determines that the target user has given authorization to provide the user's own location information to the service provider. In this case, the authorization server transmits an access token to the client device. The access token indicates that the target user has given authorization to provide the location information. In addition, the access token is forwarded to the client device via the user terminal by using HTTP redirect.

The client device accesses the resource server using the access token received from the authorization server. The resource server provides the client device with the location information of the target user based on the access token. Then, the client device provides a service to the target user based on the location information acquired from the resource server.

As described above, the procedure according to the example illustrated in FIG. 2 includes a step of confirming authorization of the user before the client device acquires the user resource from the resource server. Note that this procedure is based on OAuth 2.0.

However, in a case where the authorization of the user is confirmed in the procedure illustrated in FIG. 2, a large cost occurs on both the client side and the server side. That is, credential information of each client needs to be registered with the authorization/resource server in advance. At this time, labor for registering the credential information is large on the client side. In addition, on the authorization/resource server side, the labor of work of confirming the reliability of the credential information of the client is large. Further, on the authorization/resource server side, the cost for securely managing the credential information that is secret information is high.

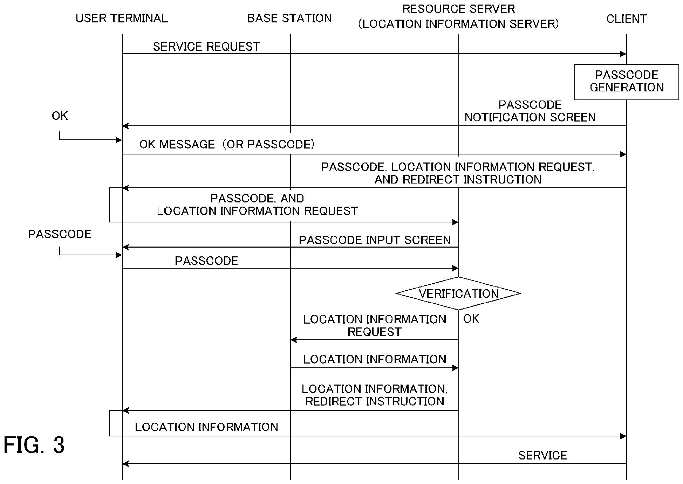

FIG. 3 illustrates an example of a procedure in which a service providing system according to an embodiment of the present disclosure provides a service to a user. The procedure illustrated in FIG. 3 is performed in the service providing system 100 illustrated in FIG. 1. That is, the service providing system 100 includes the client device 10 and the resource server 30. The client device 10 provides a service to the user K based on the location information of the user terminal 50. The resource server 30 is a location information server, and provides the location information indicating the location of the user terminal 50 in response to a location information request.

The user terminal 50 transmits a service request to the client device 10. The service request includes information indicating video contents designated by the user K. In addition, it is assumed that location information is not attached to this service request. In this case, the client device 10 determines that it is necessary to acquire the location information of the user terminal 50 in order to provide a service to the user K.

The location information of the user terminal 50 is managed as a user resource by the resource server 30. Therefore, the client device 10 acquires the location information of the user terminal 50 from the resource server 30. However, when the location information of the user terminal 50 is acquired, authorization of the user K is required. Therefore, the client device 10 acquires the authorization of the user K according to the procedure described below.

The client device 10 generates a passcode. The passcode is not particularly limited, but is, for example, a six-digit random number. However, the passcode is not limited to a six-digit number. In addition, instead of the passcode, a password including numbers and alphabet characters may be used. Then, the client device 10 generates a passcode notification screen and transmits the passcode notification screen to the user terminal 50.

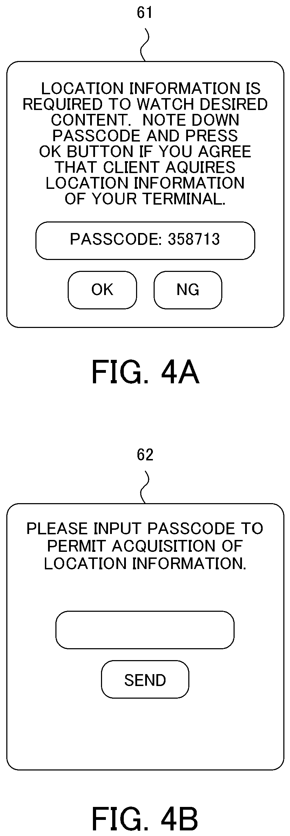

FIG. 4A illustrates an example of a passcode notification screen. A passcode notification screen 61 includes an inquiry sentence for inquiring the user whether or not the client may acquire the location information of the user terminal. In addition, the passcode notification screen 61 also displays the passcode generated by the client device 10. Further, the passcode notification screen 61 includes an OK button indicating that the acquisition of the location information is permitted and an NG button indicating that the acquisition of the location information is not permitted. Then, the passcode notification screen 61 is displayed on the user terminal 50.

When permitting the client device 10 to acquire the location information of the user terminal 50, the user K memorizes the passcode and selects the OK button using the passcode notification screen 61. On the other hand, when not permitting the client device 10 to acquire the location information of the user terminal 50, the user K selects the NG button using the passcode notification screen 61. Here, it is assumed that the OK button is selected.

When the OK button is selected, an OK message is transmitted from the user terminal 50 to the client device 10. The OK message indicates that permission to use the location information of the user terminal 50 has been obtained. Alternatively, when the OK button is selected, the user terminal 50 may return the passcode displayed on the passcode notification screen 61 to the client device 10.

Note that although the passcode notification screen 61 illustrated in FIG. 4A displays an inquiry sentence and a passcode, the embodiment is not limited to this configuration. For example, the client device 10 may notify the user terminal 50 of the passcode after transmitting the above inquiry sentence to the user terminal 50 and receiving the OK message from the user terminal 50.

When receiving the OK message (or passcode), the client device 10 transmits the passcode and the location information request to the resource server 30. This passcode is the same as the passcode that has been given to the user K using the passcode notification screen 61. In addition, the location information request requests the location information indicating the location of the user terminal 50. However, in this example, the passcode and the location information request are forwarded to the resource server 30 via the user terminal 50. At this time, for example, the client device 10 gives an HTTP redirect instruction to the user terminal 50 such that the user terminal 50 accesses the resource server 30.

When receiving the passcode and the location information request from the client device 10, the user terminal 50 accesses the resource server 30 according to the HTTP redirect instruction. At this time, the user terminal 50 forwards the passcode and the location information request received from the client device 10 to the resource server 30.

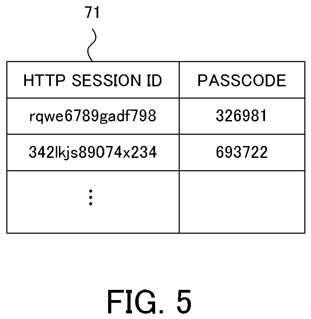

The resource server 30 registers the passcode received from the user terminal 50 in a passcode management table 71 illustrated in FIG. 5. The passcode management table 71 manages the passcode received from the user terminal in association with an HTTP session ID. Therefore, the passcode received from the user terminal 50 is managed in association with the HTTP session ID for identifying an HTTP session between the user terminal 50 and the resource server 30. Then, the resource server 30 generates a passcode input screen and transmits the passcode input screen to the user terminal 50.

FIG. 4B illustrates an example of a passcode input screen. A passcode input screen 62 includes a description for the user to input the passcode that has been previously given using the passcode notification screen 61. In addition, the passcode input screen 62 includes an area for the user to input the passcode. Then, the passcode input screen 62 is displayed on the user terminal 50.

The user K uses the passcode input screen 62 to input the passcode that has been given using the passcode notification screen 61. Then, the user terminal 50 transmits the passcode input by the user K to the resource server 30. Note that it is assumed that the HTTP session configured between the user terminal 50 and the resource server 30 is maintained without being disconnected.

The resource server 30 performs passcode verification. That is, the resource server 30 compares the passcode (hereinafter, a "first passcode") received together with the location information request with the passcode (hereinafter, a "second passcode") input by the user K using the passcode input screen 62. Note that the passcode received together with the location information request is registered in the passcode management table 71 in association with the HTTP session ID. Here, in this example, it is assumed that the first passcode and the second passcode match each other. In this case, the resource server 30 transmits the location information request to a base station system. That is, the resource server 30 requests the base station system for the location information of the user terminal 50.

The base station system includes one or a plurality of base stations. In addition, each base station includes one or a plurality of radio units (RUs). An RU is one of devices constituting a base station, and includes a radio circuit and an antenna. The user terminal 50 is accommodated in any one of the RUs included in the base station system. In this case, the base station system that has received the location information request specifies an RU accommodating the user terminal 50. Then, the base station system transmits the location information indicating the location of the specified RU to the resource server 30 as the location information of the user terminal 50. According to this procedure, the resource server 30 acquires the location information of the user terminal 50.

The resource server 30 transmits the location information of the user terminal 50 to the client device 10. However, the location information is forwarded to the client device 10 via the user terminal 50. At this time, for example, the resource server 30 gives an HTTP redirect instruction to the user terminal 50 so that the user terminal 50 accesses the client device 10.

When receiving the location information from the resource server 30, the user terminal 50 accesses the client device 10 according to the HTTP redirect instruction. Then, the user terminal 50 forwards the location information received from the resource server 30 to the client device 10. According to this procedure, the client device 10 acquires the location information of the user terminal 50.

The client device 10 provides a service to the user K based on the location information of the user terminal 50. Specifically, when the user terminal 50 is located in a specified area, the client device 10 transmits video contents designated by the user K to the user terminal 50.

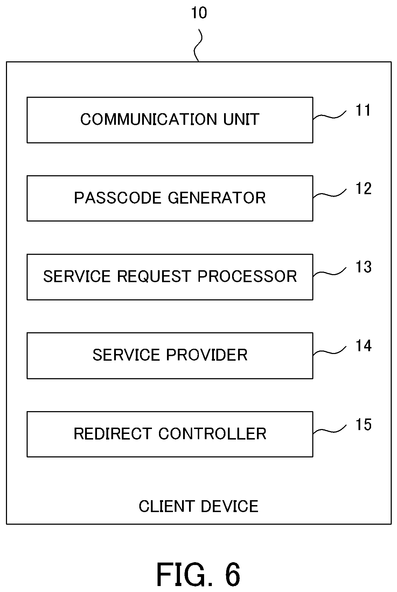

FIG. 6 illustrates an example of a functional configuration of the client device 10. The client device 10 includes a communication unit 11, a passcode generator 12, a service request processor 13, a service provider 14, and a redirect controller 15. Note that the client device 10 may include other functions, circuits, and/or devices not illustrated in FIG. 6.

The communication unit 11 includes an interface for connecting to a network. That is, the communication unit 11 can communicate with each of the resource server 30 and the user terminal 50. However, in this example, the client device 10 may communicate with the resource server 30 via the user terminal 50.

The passcode generator 12 generates a passcode in response to an instruction from the service request processor 13. The passcode is, for example, a six-digit random number. In this case, the passcode generator 12 includes a random number generator.

The service request processor 13 processes a service request received from the user terminal 50. Specifically, when a user resource is required to provide a service designated by the service request, the service request processor 13 causes the passcode generator 12 to generate a passcode. Then, the service request processor 13 notifies the user terminal 50 of the passcode generated by the passcode generator 12 using the passcode notification screen 61. In addition, the service request processor 13 requests the resource server 30 for the user resource corresponding to the service request as necessary. Further, the service request processor 13 determines whether or not the acquired user resource satisfies a specified condition. When the acquired user resource satisfies the specified condition, the service request processor 13 causes the service provider 14 to provide a service.

The service provider 14 provides a service to the user in response to an instruction from the service request processor 13. For example, the service provider 14 transmits video contents to the user terminal 50. When the client device 10 transmits the passcode and the resource request to the user terminal 50, the redirect controller 15 gives a redirect instruction to the user terminal 50, so that the user terminal 50 accesses the resource server 30.

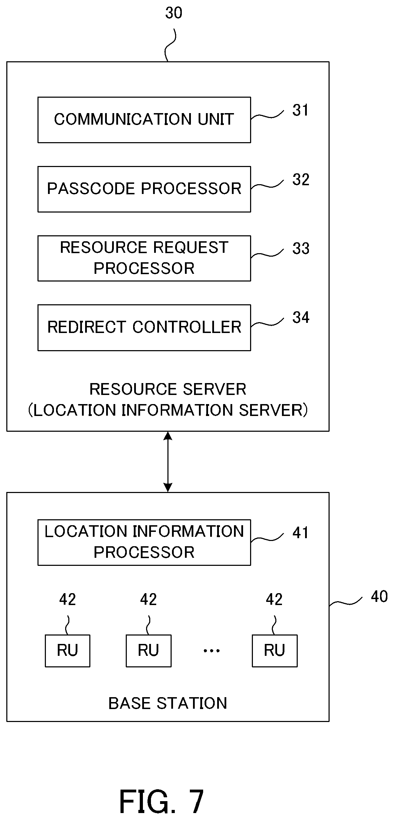

FIG. 7 illustrates an example of a functional configuration of the resource server 30. The resource server 30 includes a communication unit 31, a passcode processor 32, a resource request processor 33, and a redirect controller 34. Note that the resource server 30 may include other functions, circuits, and/or devices not illustrated in FIG. 7.

The communication unit 31 includes an interface for connecting to a network. That is, the communication unit 31 can communicate with each of the client device 10 and the user terminal 50. However, in this example, the resource server 30 may communicate with the client device 10 via the user terminal 50.

The passcode processor 32 receives the first passcode that is the same as the passcode, that has been given from the client device 10 to the user terminal 50, from the client device 10 via the user terminal 50. In addition, the passcode processor 32 transmits the passcode input screen 62 to the user terminal 50 and receives the second passcode input in the user terminal 50. Further, the passcode processor 32 determines whether or not to provide the user resource relating to the user terminal 50 to the client device 10 based on a result of a comparison between the first passcode and the second passcode. Specifically, when the first passcode and the second passcode match each other, the passcode processor 32 determines that the user resource relating to the user terminal 50 may be provided to the client device 10.

The resource request processor 33 provides the user resource relating to the user terminal 50 to the client device 10 according to the determination by the passcode processor 32. Specifically, when the passcode processor 32 determines that the user resource relating to the user terminal 50 may be provided to the client device 10, the resource request processor 33 provides the user resource relating to the user terminal 50 to the client device 10.

As an example, it is assumed that the user resource relating to the user terminal 50 is the location information of the user terminal 50. In this case, the resource request processor 33 inquires a base station 40 about the location of the terminal that has transmitted the location information request. The location information request includes identification information for identifying the terminal (in this example, the user terminal 50) that has transmitted the location information request. When inquiring the base station 40 about the location of the terminal, the resource request processor 33 notifies the base station 40 of identification information of the terminal. Note that, in the following description, the terminal that has transmitted the location information request may be referred to as a "target terminal".

As illustrated in FIG. 7, the base station 40 includes a location information processor 41 and one or more RUs 42. The location information processor 41 specifies the RU 42 accommodating the target terminal based on the identification information included in the location information request. Subsequently, the location information processor 41 notifies the resource request processor 33 of the location information indicating the location of the specified RU 42 as the location information of the target terminal. According to this procedure, the resource request processor 33 acquires the location information of the target terminal. Then, the resource request processor 33 provides the acquired location information to the client device 10.

The redirect controller 34 provides a redirect instruction to the user terminal 50, so that when the resource server 30 transmits the user resource to the user terminal 50, the user terminal 50 accesses the client device 10.

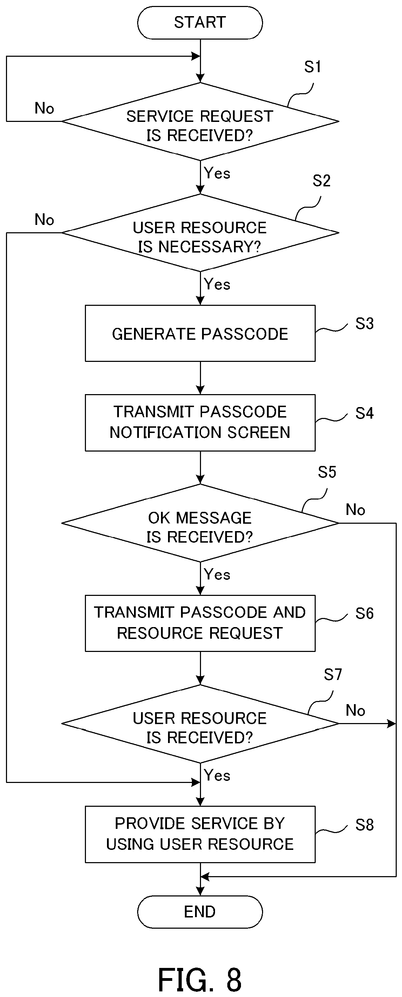

FIG. 8 is a flowchart illustrating an example of a process of the client device 10. Note that the client device 10 waits for a service request transmitted from the user terminal in S1. When the service request is received, the process of the client device 10 proceeds to S2.

In S2, the client device 10 determines whether or not to use the resource of the user when providing the service designated by the service request to the user. In this example, it is assumed that, for each service, whether or not a corresponding user resource is necessary, and what kind of user resource is necessary when necessary, are determined in advance. For example, in a service for distributing video contents to the user terminal located in a specified area, the location information of the user terminal is necessary as the user resource.

When the user resource is necessary, the client device 10 inquires the user as to whether the client device 10 may acquire the user resource in S3 to S5. Specifically, in S3, the client device 10 generates a passcode. In S4, the client device 10 creates a passcode notification screen and transmits the passcode notification screen to the user terminal 50. The passcode notification screen includes the passcode generated in S3. In addition, the passcode notification screen includes a description for inquiring the user as to whether or not the client device 10 may acquire the user resource. In S5, the client device 10 waits for a user message indicating whether or not the client device 10 may acquire the user resource.

In the example illustrated in FIG. 4A, the user of the user terminal 50 selects the OK button or NG button on the passcode notification screen 61. When the OK button is selected, an OK message indicating that the acquisition of the user resource is permitted is transmitted from the user terminal 50 to the client device 10. Alternatively, when the OK button is selected, the user terminal 50 may return the passcode that has been given on the passcode notification screen 61 to the client device 10. On the other hand, when the NG button is selected, an NG message indicating that the acquisition of the user resource is rejected is transmitted from the user terminal 50 to the client device 10.

When receiving the OK message (or passcode), the client device 10 transmits the passcode generated in S3 and the resource request for requesting the user resource to the resource server 30 in S6. However, in this example, the passcode and the resource request are forwarded to the resource server 30 via the user terminal 50 by HTTP redirect.

In S7, the client device 10 waits for the user resource transmitted from the resource server 30. However, in this example, the user resource transmitted from the resource server 30 is forwarded to the client device 10 via the user terminal 50 by HTTP redirect.

Upon receiving the user resource, the client device 10 provides a service to the user terminal 50 using the user resource in S8. At this time, the client device 10 may provide a service when the user resource satisfies a specified condition. For example, when the user terminal 50 is located in a specified area, video content is distributed to the user terminal 50.

When the user resource is not necessary in providing the service (S2: No), S3 to S7 are skipped, and the client device 10 provides the service to the user terminal 50 in S8. In addition, when the OK message is not received in S5, or when the user resource is not received in S7, the client device 10 does not provide the service to the user terminal 50.

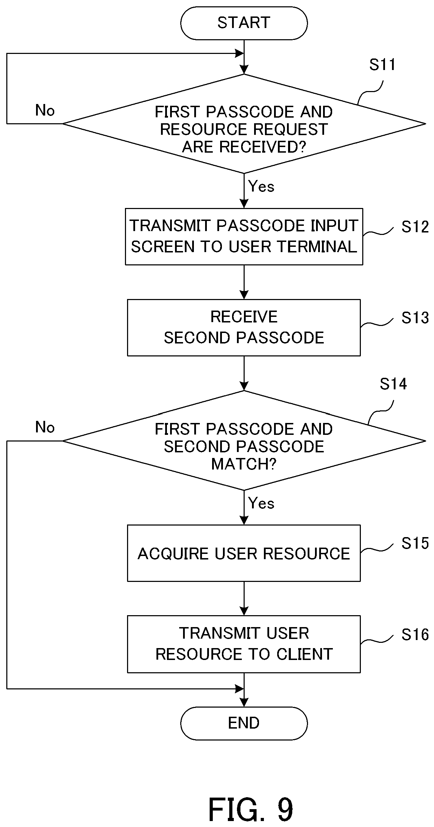

FIG. 9 is a flowchart illustrating an example of a process of the resource server 30. In S11, the resource server 30 waits for the first passcode and the resource request. When the first passcode and the resource request are received, the process of the resource server 30 proceeds to S12. Note that the first passcode corresponds to the passcode generated by the client device 10 in S3 illustrated in FIG. 8. Therefore, when the first passcode is transmitted from the client device 10 in S6 illustrated in FIG. 8, the first passcode is forwarded to the resource server 30 via the user terminal 50 by HTTP redirect. At this time, the resource request is transmitted together with the first passcode.

In S12, the resource server 30 creates a passcode input screen and transmits the passcode input screen to the user terminal 50. As illustrated in FIG. 4B, the passcode input screen includes a description for the user of the user terminal 50 to input the passcode. Here, it is assumed that the user of the user terminal 50 inputs a passcode (that is, the second passcode) using the passcode input screen. Then, the resource server 30 receives the second passcode in S13.

In S14, the resource server 30 compares the first passcode received in S11 with the second passcode received in S13. That is, the passcode generated by the client device 10 is compared with the passcode input by the user of the user terminal 50. As a result, when the first passcode and the second passcode match each other, the resource server 30 determines that the authorization of the user to provide the user resource to the client device 10 is obtained. In this case, the resource server 30 acquires the user resource in S15. As an example, the location information of the user terminal 50 is acquired.

In S16, the resource server 30 transmits the acquired user resource to the client device 10. However, in this example, the user resource is forwarded to the client device 10 via the user terminal 50 by HTTP redirect. Note that when the first passcode and the second passcode do not match each other, S15 to S16 are skipped. In this case, the resource server 30 does not provide the user resource to the client device 10.

As described above, in the service providing system 100 according to the embodiment, when the passcode generated by the client device 10 and presented to the user of the user terminal 50 matches the passcode input by the user in the user terminal 50, the resource server 30 determines that the authorization of the user for the client device 10 to acquire the user resource is obtained. That is, the resource server 30 can consider the client device 10 as a trusted entity. Therefore, according to this procedure, credential information of a client does not need to be registered with the resource server 30 in advance. This eliminates the labor of the client to register its own credential information as compared with the procedure illustrated in FIG. 2. In addition, on the resource server side, the work of confirming the reliability of the credential information of the client is eliminated. Further, on the resource server side, the cost for securely managing the credential information that is secret information is eliminated. In addition, not the pre-registered password but the newly generated passcode upon request of the service is used to confirm authorization of the user, so that flexibility in handling the user resource is high, and a security level is also high.

### Variations

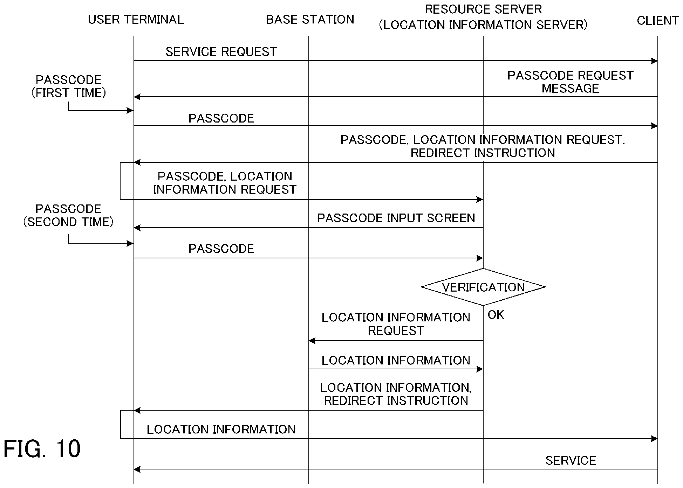

In the example illustrated in FIG. 3, the client device 10 generates a passcode and presents the passcode to the user, but the embodiment is not limited to this procedure. For example, in the example illustrated in FIG. 10, the client device 10 that has received the service request requests the user terminal 50 for a passcode. In response to this, when the user of the user terminal 50 inputs the passcode, the input passcode is sent from the user terminal 50 to the client device 10. The subsequent procedure is the same in FIGS. 3 and 10. As described above, in the variation illustrated in FIG. 10, the user inputs the passcode twice. Then, when the passcode of the first time matches the passcode of the second time, the user resource is provided from the resource server 30 to the client device 10.

In the example illustrated in FIG. 3 or 10, the user resource is provided from the resource server 30 to the client device 10, but the embodiment is not limited to this procedure. For example, the resource server 30 may issue an access token as in OAuth 2.0. In this case, the access token represents permission to access the user resource. In addition, the client device 10 can acquire the corresponding user resource by transmitting the access token to the resource server 30.

In order to increase the security of the user resource, it is preferable that the resource server 30 does not provide the user resource to the client device in the cases described below.
(1) When encrypted communication cannot be configured with a redirect destination (that is, the client device), the resource server 30 does not provide the user resource. For example, when the redirect destination does not support hypertext transfer protocol secure (HTTPS), the resource server 30 does not provide the user resource.
(2) When there is a risk of open redirect of a uniform resource locator (URL) of the redirect destination, the resource server 30 does not provide the user resource. For example, when a query is assigned to the URL of the redirect destination, the resource server 30 does not provide the user resource.

Note that, in these cases, the resource server 30 preferably notifies the user terminal that the user resource is not to be provided to the client device.

### Hardware Configuration

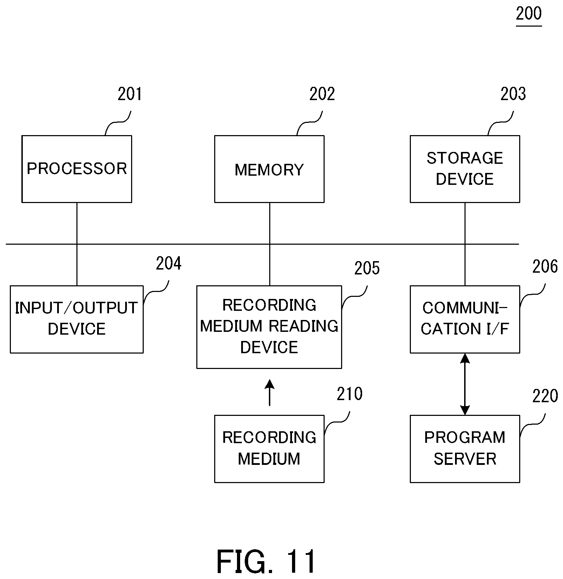

FIG. 11 illustrates an example of a hardware configuration of the resource server 30. The resource server 30 is achieved by a computer 200 including a processor 201, a memory 202, a storage device 203, an input/output device 204, a recording medium reading device 205, and a communication interface 206.

The processor 201 controls the operation of the resource server 30 by executing a server program stored in the storage device 203. The server program includes a program code describing the procedure of the flowchart illustrated in FIG. 9. Therefore, when the processor 201 executes this program, the functions of the communication unit 31, the passcode processor 32, the resource request processor 33, and the redirect controller 34 illustrated in FIG. 7 are provided. The memory 202 is used as a work area of the processor 201. The storage device 203 stores the above-described server program and other programs.

The input/output device 204 includes an input device such as a keyboard, a mouse, a touch panel, or a microphone. In addition, the input/output device 204 includes an output device such as a display device and a speaker. The recording medium reading device 205 can acquire data and information recorded in a recording medium 210. The recording medium 210 is a removable recording medium detachable from the computer 200. In addition, the recording medium 210 is achieved by, for example, a semiconductor memory, a medium that records a signal by an optical action, or a medium that records a signal by a magnetic action. The server program may be given from the recording medium 210 to the computer 200. The communication interface 206 provides a function of connecting to a network. Note that when the server program is stored in a program server 220, the computer 200 may acquire the server program from the program server 220.

## Claims

1. A server program for causing a computer to execute a server process comprising:
receiving, from a client (10) via a user terminal (50), a first passcode that is given from the client (10) to the user terminal (50) in response to an access from the user terminal (50) to the client (10) that provides a service to the user terminal (50);
requesting the user terminal (50) to input a second passcode;
receiving the second passcode from the user terminal (50); and
determining whether to provide a resource relating to the user terminal (50) to the client (10) based on a result of a comparison between the first passcode and the second passcode.

2. The server program according to claim 1, wherein
the process of requesting the user terminal (50) to input a passcode includes:
a process of creating a passcode input screen for a user of the user terminal (50) to input a passcode; and
a process of transmitting the passcode input screen to the user terminal (50).

3. The server program according to claim 1, wherein
the resource relating to the user terminal (50) is location information indicating a location of the user terminal (50),
the server program causing the computer to further execute:
a process of inquiring a base station for the location information of the user terminal (50) when the first passcode and the second passcode match each other; and
a process of acquiring the location information of the user terminal (50) from the base station.

4. The server program according to claim 1, causing the computer to further execute:
a process of providing the resource relating to the user terminal (50) to the client (10) when the first passcode and the second passcode match each other.

5. The server program according to claim 1, causing the computer to further execute:
a process of providing an access token for accessing the resource relating to the user terminal (50) to the client (10) when the first passcode and the second passcode match each other.

6. The server program according to claim 1, causing the computer to further execute:
a process of storing the first passcode in a passcode storage in association with identification information for identifying communication between the user terminal (50) and the computer; and
a process of, when the second passcode is received, acquiring, from the passcode storage, the first passcode corresponding to identification information for identifying communication for transmitting the second passcode from the user terminal (50) to the computer.

7. A resource server (30) that manages a resource relating to a user terminal (50), the resource server comprising:
a communication unit (31); and
a passcode processor (32) that processes a passcode received by the communication unit, wherein
the communication unit receives, from a client (10) via the user terminal (50), a first passcode that is given from the client (10) to the user terminal (50) in response to an access from the user terminal (50) to the client (10) that provides a service to the user terminal (50),
the passcode processor requests the user terminal (50) to input a second passcode,
the communication unit receives the second passcode from the user terminal (50), and
the passcode processor determines whether to provide the resource relating to the user terminal (50) to the client (10) based on a result of a comparison between the first passcode and the second passcode.

8. A service providing system that includes a client device (10) and a resource server (30) and provides a service to a user terminal (50), wherein
the client device (10) notifies the user terminal (50) of a first passcode in response to an access from the user terminal (50), and transmits the first passcode and a resource request to the resource server via the user terminal (50),
the resource server
receives the first passcode from the client device (10) via the user terminal (50),
requests the user terminal (50) to input a second passcode,
receives the second passcode from the user terminal (50), and
provides a resource designated by the resource request to the client device (10) when the first passcode and the second passcode match each other, and
the client device (10) provides a service to the user terminal (50) using a resource provided from the resource server.

## Patentansprüche

1. Serverprogramm, das einen Computer veranlasst, einen Serverprozess auszuführen, umfassend:
Empfangen, von einem Client (10) über ein Benutzerendgerät (50), eines ersten Zugangscodes, der dem Endgerät (50) von dem Client (10) als Reaktion auf einen Zugriff vom Benutzerendgerät (50) auf den Client (10) vergeben wird und der einen Dienst an das Benutzerendgerät (50) bereitstellt;
Richten einer Anfrage an das Benutzerendgerät (50), einen zweiten Zugangscode einzugeben;
Empfangen des zweiten Zugangscodes vom Benutzerendgerät (50); und
Bestimmen, basierend auf einem Ergebnis eines Vergleichs zwischen dem ersten Zugangscode und dem zweiten Zugangscode, ob eine Ressource in Bezug auf das Benutzerendgerät (50) an den Client (10) bereitgestellt werden soll.

2. Serverprogramm nach Anspruch 1, wobei
der Prozess des Richtens einer Anfrage an das Benutzerendgerät (50), einen Zugangscode einzugeben, Folgendes einschließt:
einen Prozess des Erstellens eines Zugangscode-Eingabebildschirms für einen Benutzer des Benutzerendgeräts (50) zum Eingeben eines Zugangscodes; und
einen Prozess des Übertragens des Zugangscode-Eingabebildschirms an das Benutzerendgerät (50).

3. Serverprogramm nach Anspruch 1, wobei
wobei die Ressource in Bezug auf das Benutzerendgerät (50) eine Standortinformation ist, die einen Standort des Benutzerendgeräts (50) angibt,
das Serverprogramm den Computer veranlasst, weiter Folgendes auszuführen:
einen Prozess des Nachfragens, bei einer Basisstation, nach der Standortinformation des Benutzerendgeräts (50), wenn der erste Zugangscode und der zweite Zugangscode miteinander übereinstimmen; und
einen Prozess des Erhaltens der Standortinformation des Benutzerendgeräts (50), von der Basisstation.

4. Serverprogramm nach Anspruch 1, das den Computer veranlasst, weiter Folgendes auszuführen:
einen Prozess des Bereitstellens der Ressource in Bezug auf das Benutzerendgerät (50) an den Client (10), wenn der erste Zugangscode und der zweite Zugangscode miteinander übereinstimmen.

5. Serverprogramm nach Anspruch 1, das den Computer veranlasst, weiter Folgendes auszuführen:
einen Prozess des Bereitstellens eines Zugriffstokens zum Zugreifen auf die Ressource in Bezug auf das Benutzerendgerät (50) an den Client (10), wenn der erste Zugangscode und der zweite Zugangscode miteinander übereinstimmen.

6. Serverprogramm nach Anspruch 1, das den Computer veranlasst, weiter Folgendes auszuführen:
einen Prozess des Speicherns des ersten Zugangscodes in einem Zugangscodespeicher in Verbindung mit Identifikationsinformationen zum Identifizieren von Kommunikation zwischen dem Benutzerendgerät (50) und dem Computer; und
einen Prozess, wenn der zweite Zugangscode empfangen wird, des Erhaltens, aus dem Zugangscodespeicher, des ersten Zugangscodes entsprechend den Identifikationsinformationen zum Identifizieren von Kommunikation zum Übertragen des zweiten Zugangscodes vom Benutzerendgerät (50) an den Computer.

7. Ressourcenserver (30), der eine Ressource in Bezug auf ein Benutzerendgerät (50) verwaltet, wobei der Ressourcenserver Folgendes umfasst:
eine Kommunikationseinheit (31); und
einen Zugangscode-Prozessor (32), der einen von der Kommunikationseinheit empfangenen Zugangscode verarbeitet, wobei
die Kommunikationseinheit von einem Client (10) über das Benutzerendgerät (50) einen ersten Zugangscode empfängt, der dem Endgerät (50) von dem Client (10) als Reaktion auf einen Zugriff vom Benutzerendgerät (50) auf den Client (10) vergeben wird und der einen Dienst an das Benutzerendgerät (50) bereitstellt,
der Zugangscode-Prozessor eine Anfrage an das Benutzerendgerät (50) richtet, einen zweiten Zugangscode einzugeben;
die Kommunikationseinheit den zweiten Zugangscode vom Benutzerendgerät (50) empfängt, und
der Zugangscode-Prozessor basierend auf einem Ergebnis eines Vergleichs zwischen dem ersten Zugangscode und dem zweiten Zugangscode bestimmt, ob die Ressource in Bezug auf das Benutzerendgerät (50) an den Client (10) bereitgestellt werden soll.

8. Dienstbereitstellungssystem, das eine Clientvorrichtung (10) und einen Ressourcenserver (30) einschließt und einem Benutzerendgerät (50) einen Dienst bereitstellt, wobei
die Clientvorrichtung (10) das Benutzerendgerät (50) als Reaktion auf einen Zugriff vom Benutzerendgerät (50) über einen ersten Zugangscode benachrichtigt und den ersten Zugangscode und eine Ressourcenanfrage an den Ressourcenserver über das Benutzerendgerät (50) überträgt,
der Ressourcenserver
den ersten Zugangscode von der Clientvorrichtung (10) über das Benutzerendgerät (50) empfängt,
eine Anfrage an das Benutzerendgerät (50) richtet, einen zweiten Zugangscode einzugeben,
den zweiten Zugangscode vom Benutzerendgerät (50) empfängt, und
eine Ressource bereitstellt, die von der Ressourcenanfrage an die Clientvorrichtung (10) bezeichnet wird, wenn der erste Zugangscode und der zweite Zugangscode miteinander übereinstimmen, und
die Clientvorrichtung (10) einen Dienst an das Benutzerendgerät (50) unter Verwendung einer von dem Ressourcenserver bereitgestellten Ressource bereitstellt.

## Revendications

1. Programme de serveur destiné à amener un ordinateur à mettre en œuvre un procédé de serveur comprenant :
la réception, depuis un client (10) par l'intermédiaire d'un terminal utilisateur (50), d'un premier code secret qui est donné par le client (10) au terminal utilisateur (50) en réponse à un accès du terminal utilisateur (50) au client (10) qui fournit un service au terminal utilisateur (50) ;
la demande au terminal utilisateur (50) de saisir un deuxième code secret ;
la réception du deuxième code secret depuis le terminal utilisateur (50) ; et
la détermination de savoir s'il convient de fournir des ressources relatives au terminal utilisateur (50) au client (10) sur la base d'un résultat d'une comparaison entre le premier code secret et le deuxième code secret.

2. Programme de serveur selon la revendication 1, dans lequel
le procédé consistant à demander au terminal utilisateur (50) de saisir un code secret inclut :
un procédé de création d'un écran de saisie de code secret permettant à un utilisateur du terminal utilisateur (50) de saisir un code secret ; et
un procédé de transmission de l'écran de saisie de code secret au terminal utilisateur (50).

3. Programme de serveur selon la revendication 1, dans lequel
les ressources relatives au terminal utilisateur (50) sont des informations d'emplacement indiquant un emplacement du terminal utilisateur (50),
le programme de serveur amenant l'ordinateur à mettre en œuvre en outre :
un procédé d'interrogation d'une station de base pour obtenir les informations d'emplacement du terminal utilisateur (50) lorsque le premier code secret et le deuxième code secret correspondent l'un à l'autre ; et
un procédé d'acquisition des informations d'emplacement du terminal utilisateur (50) depuis la station de base.

4. Programme de serveur selon la revendication 1, amenant l'ordinateur à mettre en œuvre en outre :
un procédé de fourniture des ressources relatives au terminal utilisateur (50) au client (10) lorsque le premier code secret et le deuxième code secret correspondent l'un à l'autre.

5. Programme de serveur selon la revendication 1, amenant l'ordinateur à mettre en œuvre en outre :
un procédé de fourniture d'un jeton d'accès pour accéder aux ressources relatives au terminal utilisateur (50) au client (10) lorsque le premier code secret et le deuxième code secret correspondent l'un à l'autre.

6. Programme de serveur selon la revendication 1, amenant l'ordinateur à mettre en œuvre en outre :
un procédé de stockage du premier code secret dans un stockage de codes secrets en association avec des informations d'identification pour identifier une communication entre le terminal utilisateur (50) et l'ordinateur ; et
un procédé d'acquisition, lorsque le deuxième code secret est reçu, depuis le stockage de codes secrets, du premier code secret correspondant aux informations d'identification pour identifier une communication pour transmettre le deuxième code secret du terminal utilisateur (50) à l'ordinateur.

7. Serveur de ressources (30) qui gère des ressources relatives à un terminal utilisateur (50), le serveur de ressources comprenant :
une unité de communication (31) ; et
un processeur (32) de code secret qui traite un code secret reçu par l'unité de communication, dans lequel
l'unité de communication reçoit, depuis un client (10) par l'intermédiaire du terminal utilisateur (50), un premier code secret qui est donné par le client (10) au terminal utilisateur (50) en réponse à un accès du terminal utilisateur (50) au client (10) qui fournit un service au terminal utilisateur (50),
le processeur de code secret demande au terminal utilisateur (50) de saisir un deuxième code secret,
l'unité de communication reçoit le deuxième code secret depuis le terminal utilisateur (50), et
le processeur de code secret détermine s'il convient de fournir les ressources relatives au terminal utilisateur (50) au client (10) sur la base d'un résultat d'une comparaison entre le premier code secret et le deuxième code secret.

8. Système de fourniture de service qui inclut un dispositif client (10) et un serveur de ressources (30) et fournit un service à un terminal utilisateur (50), dans lequel
le dispositif client (10) notifie au terminal utilisateur (50) un premier code secret en réponse à un accès depuis le terminal utilisateur (50), et transmet le premier code secret et une demande de ressources au serveur de ressources par l'intermédiaire du terminal utilisateur (50),
le serveur de ressources
reçoit le premier code secret depuis le dispositif client (10) par l'intermédiaire du terminal utilisateur (50),
demande au terminal utilisateur (50) de saisir un deuxième code secret,
reçoit le deuxième code secret depuis le terminal utilisateur (50), et
fournit des ressources désignées par la demande de ressources au dispositif client (10) lorsque le premier code secret et le deuxième code secret correspondent l'un à l'autre, et
le dispositif client (10) fournit un service au terminal utilisateur (50) en utilisant des ressources fournies depuis le serveur de ressources.
